# EUROPEAN PATENT SPECIFICATION

(11) **EP 1 379 037 B1**
(45) Date of publication and mention of the grant of the patent: **21.12.2005**
(21) Application number: 03101782.5
(22) Date of filing: 18.06.2003
(51) Int. Cl.: H04L 12/56, H04L 29/06

(54) **Packet routing based on user ID in virtual private networks**
Auf Benutzerkennwort basierende Paketvermittlung in virtuellen privaten Netzen
Acheminement par paquets dans des réseaux privés virtuels basé sur ID utilisateur

(30) Priority: 01.07.2002 US 185714
(43) Date of publication of application: 07.01.2004
(73) Proprietor: Stonesoft Corporation, 00210 Helsinki (FI)
(72) Inventor: Mikkonen, Olli, 02400, Kirkkonummi (FI)
(74) Representative: Äkräs, Tapio Juhani

(56) References cited:
- US-A- 5 872 779
- US-A- 6 154 839
- US-A1- 2001 000 193
- US-A1- 2003 065 787
- BERT HUBER ET. AL: "LINUX 2.4 ADVANCED ROUTING HOWTO" LINUX 2.4 ADVANCED ROUTING, [Online] 26 May 2000 (2000-05-26), pages 1-49, XP002251223 Retrieved from the Internet: <URL:http://www.mh-hannover.de/student/sof tware/linux-howtos-pdf/Adv-Routing-HOWTO.p df> [retrieved on 2003-08-13]

## Description

### FIELD OF THE INVENTION

The present invention relates to routing data packets in data networks and especially to routing data packets with regard to virtual private networks (VPN).

### BACKGROUND OF THE INVENTION

In data networks such as Internet, information is transferred in data packets, which are routed to their destination on the basis of a destination address, such as Internet Protocol (IP) address, included in the data packet. Originally, one IP address was associated with one physical machine and data packets could be routed to the correct destination simply on the basis of the destination address. But nowadays, sole destination address does not always identify the destination device unambiguously.

For example, due to limited amount of IP addresses and lack of inherent security in the Internet, organizations often use only a limited number of public IP addresses and hide IP addresses of their internal networks behind these public addresses by means of Network Address Translation (NAT). In this kind of arrangement the IP addresses used in various different internal networks (internal addresses) can be the same. Usually, this does not cause any problems, since often there is a device sitting in the border of the internal network taking care of translating internal addresses to public addresses and vice versa, and forwarding the data packets to correct destinations.

However, there are several situations, where routing data packets solely on the basis of the destination address does not work. One solution for finding correct destination is to use source IP address and/or source/destination ports, which can also be found in a data packet, as a basis of the routing decision. However, even this does not help in all cases and there is a need for a new routing solution.

US-A-6 154 839 discloses a NAT based address translation wherein a temporary priviledged address is assigned to a remote client for communication within a firewall. The priviledged address in the reply packets is used as an index to a lookup table containing the addresses of remote clients.

### SUMMARY OF THE INVENTION

An object of the invention is to provide a new method, computer program product and network element for routing data packets.

This object of the invention is achieved according to the invention as disclosed in the attached independent claims. Preferred embodiments of the invention are disclosed in the dependent claims. The features described in one dependent claim may be further combined with features described in another dependent claim to produce further embodiments of the invention.

The idea of the invention is to route data packets on the basis of information, which is not inherently available in the data packet to be routed. That is, according to the invention a piece of information, which is indirectly associated with the data packet, is first determined, and the data packet is routed at least partially on the basis of said piece of information. Said information may be for example a user identity associated with the data packets or time of the day or date. Being indirectly associated with the data packet herein means that the information that is used for making routing decision cannot be obtained directly from the data packet, but an additional action is needed: e.g. for obtaining user identity authentication service is needed and time of the day or date are obtained for example from the system, which is implementing the invention.

According to one aspect of the invention a user identity associated with a data packet is first determined, and the data packet is routed at least partially on the basis of said user identity.

According to another aspect of the invention, routing information is included in a firewall or VPN rule, and routing the data packet comprises finding a filtering rule matching at least with said user identity, obtaining routing information from said filtering rule, and routing the data packet on the basis of the routing information.

In addition to the user identity for example time of day and/or date can be used for finding matching rule and consequently routing information for the data packet.

The invention is especially suitable for virtual private networks. Virtual private networks are means for communicating privately over public networks. For example a laptop connected to the Internet can communicate securely with a server sitting in the internal network of an organization. Internal addressing of the server is used in the actual data packets, but for delivery over the Internet the actual data packets from the laptop are encrypted and encapsulated into an outer data packet addressed to a VPN gateway sitting in the border of the internal network. The VPN gateway then decapsulates the data packet and forwards it to the original destination on the basis of the address found in the internal data packet. VPNs are commonly set up between two VPN gateways as well. However, specific details of a VPN implementation are not relevant considering the invention, and are thus not discussed herein any further.

A potential problem in routing data packets in connection with VPNs is caused for example when a Managed Service Provider (MSP) fers VPN gateway service to multiple customers. Let's consider for example that an MSP uses one VPN gateway for handling VPN connections of multiple customers, each customer having own interface to the VPN gateway, and in the same time allows the customers to choose overlapping internal addresses for use. Now, if a data packet of a VPN connection from a given external source to an internal address X arrives at the VPN gateway and the internal address X is in use in more than one internal network connected to the VPN gateway, it is impossible to find out on the basis of the destination address, which X is the correct destination. Even the use of source address does not help, since mobile terminals typically use dynamic IP addresses and thus the source address does not offer any additional information. But the method of the invention solves this problem as user identity is used for routing. According to the invention different customers register with the MSP the user identities, which are allowed to use their VPN. VPN gateway of the MSP can then easily find the correct internal network for a given data packet by finding the internal network related to the user identity associated with the data packet.

Another problem that can be solved with the invention is that even though all customer networks connected to MSP's VPN gateway employed different internal address spaces, a customer may want that all traffic originating from laptops of the customer need to be routed through it's internal network. That is, even traffic whose destination is in the Internet should be directed to the internal network of the customer and to the Internet only from thereon. This way the customer can enforce it's own security policy for the traffic before allowing it to proceed. In this case prior art solutions do not offer any way for the VPN gateway to know, which internal network is the correct destination for a decrypted data packet wherein the destination address points towards the Internet. But by basing the routing decision on the user identity according to the invention, the correct destination can be found.

### BRIEF DESCRIPTION OF THE DRAWINGS

Various features of the invention, as well as the advantages offered thereby, are described hereinafter in more detail with reference to embodiments illustrated in the accompanying drawings, in which
Figure 1 illustrates an example network configuration,
Figure 2A is a flow chart illustrating an aspect of the method of the invention, and
Figure 2B is a flow chart illustrating another aspect of the method of the invention.

### PREFERRED EMBODIMENTS OF THE INVENTION

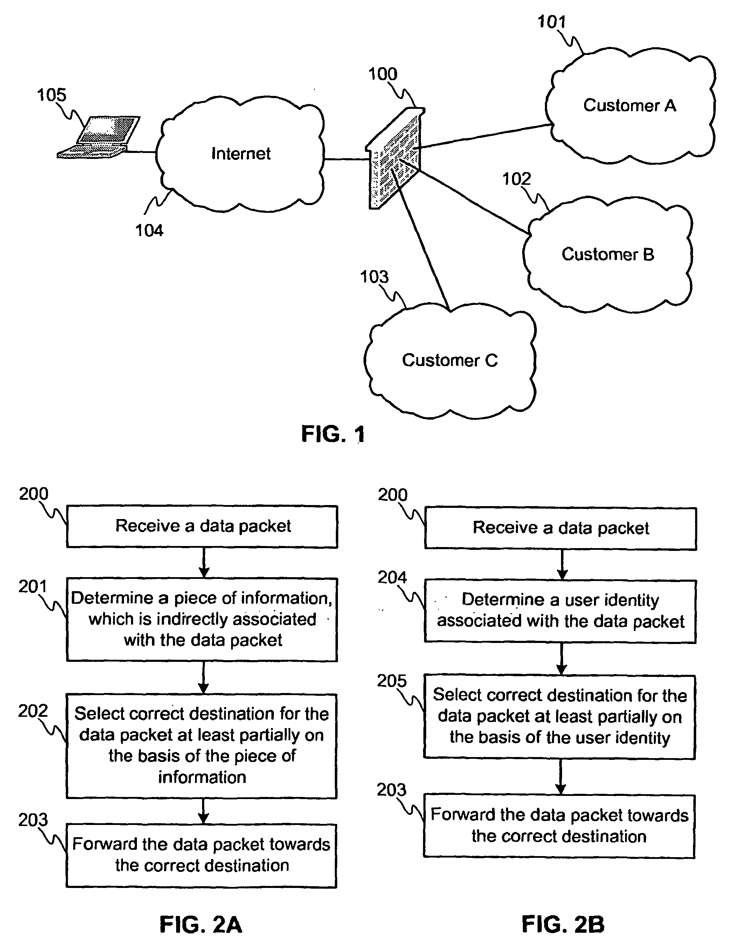

Figure 1 illustrates an example network configuration, wherein the invention may be used. Internal networks of customers A, B and C 101-103 are connected to the Internet 104 via a firewall 100, which is administered by an MSP (not shown in Figure). The firewall operates also as a VPN gateway for the internal networks and enables secure remote connections from devices connected to the Internet, such as laptop 105, to the internal networks. When a data packet from the laptop 105 arrives at the firewall 100, the next hop from the firewall onwards for the data packet is decided according to the invention at least partly on the basis of the user identity associated with the data packet or laptop.

The invention can be employed in any network element, which is routing data packets in communication networks. The network element can be a firewall, such as firewall 100 in Figure 1, a VPN gateway, a router, a personal computer (PC), or whatever that can be used for such purposes. Physically the network element is a computer hardware device combined with appropriate software to do the tasks assigned to it.

The invention can be implemented for example in firewall rules. Firewall rules are used for configuring the firewall. Rules (forming a rule base) define which data packets are allowed to traverse the firewall and which are not. A rule comprises information for identifying a data packet (e.g. source and destination addresses and ports, user identity) and an associated action, which may be for example to allow or deny the packet. Usually everything that is not explicitly allowed in the rules is denied. The action may be also something else than simply allow or deny. For example, the action defined in the rule may indicate that some further action needs to be taken before releasing a data packet, which is in principle allowed. Such further processing may be for example network address translation (NAT), encryption, decryption or virus checking. Also deny action may include further processing. According to one aspect of the invention routing information is included in the rule, and all other routing rules are overridden for data packets, which match to a rule containing routing information. By making the routing decision dependent on firewall rules, all information that is used for filtering data packets in the firewall can be used for making routing decisions. Thus a routing decision can be based on destination address, as well as source address or port or destination port but also on any other information in rules, such as user identity obtained from authentication process or time of the day or date.

Routing information included in a rule can be for example a gateway, to which the data packet is directed, or a network interface card (NIC) or a network link, which is used for forwarding the data packet.

Figure 2A is a flow diagram illustrating an aspect of the method of the invention. In step 200 a data packet is first received at the device implementing the invention. Then a piece of information, which is indirectly associated with the data packet, that is information which is not inherently available in the data packet, is determined in step 201. Correct destination is selected for the data packet at least partially on the basis of the piece of information in step 202. Selecting the destination does not necessarily mean selecting final destination for the data packet, but the next hop for the data packet. For example, a gateway associated with the user identity is selected from a list. Clearly selection of the destination does not need to be purely on the basis of the piece of information, which is indirectly associated with the data packet, but also information, which is readily available in the data packet, can be used. For example source and destination addresses can be taken into account where suitable. Then in step 203, the data packet is forwarded towards the destination (e.g. to the correct NIC or to the next gateway). Routing information (information about the next hop) is advantageously included in a firewall or VPN rule and data packet is automatically routed on the basis of the routing information included in a rule, to which the data packet matches.

Figure 2B is a flow diagram illustrating another aspect of the method of the invention. In step 200 a data packet is first received at the device implementing the invention. Then a user identity associated with the data packet is determined in step 204 for example by means of an authentication service. Correct destination is selected for the data packet at least partially on the basis of the user identity in step 205. Similarly to the step 202 of Figure 2A, selecting the destination does not necessarily mean selecting final destination for the data packet, but the next hop for the data packet. Also in this method additional information obtained from the data packet, such as source and destination addresses, or additional information obtained from elsewhere, such as time of day and/or date, can be taken into account in selecting the destination where suitable. Then in step 203, the data packet is forwarded towards the destination the same way as in Figure 2A.

It needs to be understood that the network configuration of Figure 1 and the usage scenarios of the invention described above are only examples and that the invention can be employed in various other ways within the scope of the invention as defined in the appended claims.

## Claims

1. A method of routing a data packet comprising
determining (201) a piece of information, which is indirectly associated with, but not contained in the data packet, charactarized by
using (202,203) the determined piece of information alone or in combination with other information in selecting a routing destination of the data packet.

2. A method as claimed in claim 1, wherein said piece of information is user identity obtained for the data packet in a user authentication.

3. A method as claimed in claim 1, wherein said piece of information is time of day and/or date.

4. A method as claimed in claim 2, wherein the step of using comprises
finding a filtering rule matching at least with said user identity,
obtaining routing information from said filtering rule, and
routing the data packet on the basis of the routing information.

5. A method as claimed in claim 4, wherein the filtering rule is a firewall rule or a virtual private network rule.

6. A method as claimed in claim 4, further comprising
determining time of day and/or date, and wherein the step of finding a filtering rule comprises
finding a filtering rule matching with the time of day and/or date in addition to said user identity.

7. A computer program product comprising computer program code which, when executed in a computer device, provides the method steps according to any one of claims 1 to 6.

8. A network element (100) for routing data packets, comprising
a programmed computer, further comprising
a memory having at least one region for storing executable program code, and
a processor for executing the program code stored in the memory,
program code for determining (201) a piece of information, which is indirectly associated with, but not contained in the data packet, **characterized in that** the program code further comprises
program code for using (202,203) the determined piece of information alone or in combination with other information in selecting a routing destination of the data packet.

9. A network element as claimed in claim 8, wherein said piece of information is user identity obtained in a user authentication.

10. A network element as claimed in claim 8, wherein said piece of information is time of day and/or date.

11. A network element as claimed in claim 9, wherein the program code for using further comprises
program code for finding a filtering rule matching at least with said user identity,
program code for obtaining routing information from said filtering rule, and
program code for routing the data packet on the basis of the routing information.

12. A network element as claimed in claim 11, wherein the filtering rule is a firewall rule or a virtual private network rule.

13. A network element as claimed in claim 11, the program code further comprising
program code for determining time of day and/or date, and wherein the program code for finding a filtering rule is adapted to find a filtering rule matching with the time of day and/or date in addition to said user identity.

## Patentansprüche

1. Verfahren zur Vermittlung eines Datenpakets durch Bestimmung (201) eines Informationsstückes, das indirekt dem Datenpaket zugeordnet, jedoch nicht in ihm enthalten ist, **dadurch gekennzeichnet, daß** das Informationsstück allein oder in Verbindung mit anderen Informationen verwendet wird (202, 203), um eine Vermittlungsbestimmung für das Datenpaket auszuwählen.

2. Verfahren nach Anspruch 1, **dadurch gekennzeichnet, daß** das Informationsstück das Benutzerkennwort ist, das für das Datenpaket aus einer Benutzerkartei erhalten wird.

3. Verfahren nach Anspruch 1, **dadurch gekennzeichnet, daß** das Informationsstück eine Tageszeit und/oder ein Datum ist.

4. Verfahren nach Anspruch 2, bei dem der Benutzungsschritt aus Auffinden einer Filterregel, die wenigstens zu dem Benutzerkennwort paßt, besteht, **gekennzeichnet durch** Erstellen einer Vermittlungsinformation aus der Filterregel und Vermitteln des Datenpaketes auf der Grundlage der Vermittlungsinformation.

5. Verfahren nach Anspruch 4, **dadurch gekennzeichnet, daß** die Filterregel eine Firewall-Regel ist oder eine virtuelle Privatnetzregel.

6. Verfahren nach Anspruch 4, bei dem die Tageszeit und/oder das Datum bestimmt werden, **dadurch gekennzeichnet, daß** der Schritt des Auffindens einer Filterregel das Auffinden einer derartigen Regel umfaßt, die zu der Tageszeit und/oder dem Datum paßt, und zwar zusätzlich zu dem Benutzerkennwort.

7. Computerprogrammprodukt mit einem Computerprogrammcode, der, wenn er in einen Computer eingegeben wird, die Verfahrensschritte gemäß einem der Ansprüche 1 bis 6 ermöglicht.

8. Netzwerkelement (100) zur Vermittlung von Datenpaketen, mit einem programmierten Computer zur Erstellung eines Speichers mit wenigstens einem Bereich zur Speicherung eines Betriebsprogrammcodes und mit einem Prozessor zur Ausführung des in dem Speicher gespeicherten Programmcodes, wobei der Programmcode zur Bestimmung (201) eines Informationsstücks dient, das indirekt dem Datenpaket zugeordnet, jedoch nicht in ihm enthalten ist, **dadurch gekennzeichnet, daß** der Programmcode zur Benutzung (202, 203) des bestimmten Informationsstückes dient, und zwar allein oder in Verbindung mit anderen Informationen, die zur Auswahl eines Vermittlungsbestimmungsortes für das Datenpaket dienen.

9. Netzwerkelement nach Anspruch 8, **dadurch gekennzeichnet, daß** das Informationsstück das Benutzerkennwort ist, das aus einer Benutzerkartei erhalten wird.

10. Netzwerkelement nach Anspruch 8, **dadurch gekennzeichnet, daß** das Informationsstück die Tageszeit und/oder das Datum sind.

11. Netzwerkelement nach Anspruch 9, **dadurch gekennzeichnet, daß** der Programmcode für folgende weitere Schritte verwendet wird: Auffinden einer Filterregel, die wenigstens zu dem Benutzerkennwort paßt, Erstellen einer Vermittlungsinformation aus der Filterregel und Vermitteln des Datenpakets auf der Basis der Vermittlungsinformation.

12. Netzwerkelement nach Anspruch 11, **dadurch gekennzeichnet, daß** die Filterregel eine Firewall-Regel oder eine virtuelle private Netzwerkregel ist.

13. Netzwerkelement nach Anspruch 11, **dadurch gekennzeichnet, daß** der Programmcode zur Bestimmung von Tageszeit und/oder Datum dient und zum Auffinden einer Filterregel geeignet ist, die zu der Tageszeit und/oder dem Datum paßt, und zwar zusätzlich zu dem Benutzerkennwort.

## Revendications

1. Méthode pour acheminer un paquet de données, selon laquelle on détermine (201) une information qui est associée indirectement au paquet de données mais pas contenue dans celui-ci,
**caractérisée en ce qu'**on utilise (202, 203) l'information déterminée, seule ou combinée avec d'autres informations, dans la sélection d'une destination d'acheminement du paquet de données.

2. Méthode selon la revendication 1, selon laquelle l'information est constituée par l'identité de l'utilisateur obtenue pour le paquet de données lors d'une authentification d'utilisateur.

3. Méthode selon la revendication 1, selon laquelle l'information est constituée par l'heure et/ou la date.

4. Méthode selon la revendication 2, selon laquelle l'étape d'utilisation consiste
à trouver une règle de filtrage qui soit adaptée au moins à l'identité de l'utilisateur,
à obtenir des informations d'acheminement à partir de la règle de filtrage, et
à acheminer le paquet de données sur la base des informations d'acheminement.

5. Méthode selon la revendication 4, selon laquelle la règle de filtrage est une règle pare-feu ou une règle de réseau privé virtuel.

6. Méthode selon la revendication 4, comprenant également les étapes qui consistent
à déterminer l'heure et/ou la date et selon laquelle l'étape qui consiste à chercher une règle de filtrage
consiste à trouver une règle de filtrage adaptée à l'heure et/ou à la date en plus de l'identité de l'utilisateur.

7. Produit programme d'ordinateur comprenant un code de programme d'ordinateur qui, lorsqu'il est exécuté dans un appareil informatique, fournit les étapes de la méthode selon l'une quelconque des revendications 1 à 6.

8. Elément de réseau (100) pour acheminer des paquets de données, comprenant
un ordinateur programmé, comprenant également
une mémoire avec au moins une zone pour stocker un code de programme exécutable, et
un processeur pour exécuter le code de programme stocké dans la mémoire,
un code de programme pour déterminer (201) une information qui est associée indirectement au paquet de données mais pas contenue dans celui-ci, **caractérisé en ce que** le code de programme comprend également
un code de programme pour utiliser (202, 203) l'information déterminée, seule ou combinée avec d'autres informations, dans la sélection d'une destination d'acheminement du paquet de données.

9. Elément de réseau selon la revendication 8, dans lequel l'information est constituée par l'identité d'utilisateur obtenue lors d'une authentification d'utilisateur.

10. Elément de réseau selon la revendication 8, dans lequel l'information est constituée par l'heure et/ou la date.

11. Elément de réseau selon la revendication 9, dans lequel le code de programme pour l'utilisation comprend par ailleurs
un code de programme pour trouver une règle de filtrage adaptée au moins à l'identité d'utilisateur,
un code de programme pour obtenir des informations d'acheminement à partir de ladite règle de filtrage, et
un code de programme pour acheminer le paquet de données sur la base des informations d'acheminement.

12. Elément de réseau selon la revendication 11, dans lequel la règle de filtrage est constituée par une règle pare-feu ou par une règle de réseau privé virtuel.

13. Elément de réseau selon la revendication 11, le code de programme comprenant par ailleurs
un code de programme pour déterminer l'heure et/ou la date et dans lequel le code de programme pour trouver une règle de filtrage est apte à trouver une règle de filtrage adaptée à l'heure et/ou à la date en plus de l'identité d'utilisateur.
